(19) Europäisches Patentamt

European Patent Office

Office européen des brevets

(11) Veröffentlichungsnummer: **0 338 450**

**A2**

(12) **EUROPÄISCHE PATENTANMELDUNG**

(21) Anmeldenummer: 89106726.6

(22) Anmeldetag: 14.04.89

(51) Int. Cl.⁴: **F16C 1/22**

(30) Priorität: 20.04.88 DE 3813267

(43) Veröffentlichungstag der Anmeldung:
25.10.89 Patentblatt 89/43

(84) Benannte Vertragsstaaten:
**DE ES FR GB IT SE**

(71) Anmelder: **AL-KO KOBER AG**
**Ichenhauser Strasse 14**
**D-8871 Kötz 2(DE)**

(72) Erfinder: **Mühlecker, Gernot**
**Gerlosstrasse 14**
**A-6280 Zell am Ziller(AT)**
Erfinder: **Brugger, Bernhard**
**Hauptstrasse 403**
**A-6290 Mayrhofen(AT)**

(74) Vertreter: **Ernicke, Hans-Dieter, Dipl.-Ing. et al**
**Schwibbogenplatz 2b**
**D-8900 Augsburg(DE)**

(54) **Anordnung zur Einstellung von Bowdenzügen.**

(57) Die Erfindung befaßt sich mit einer Anordnung zum Einstellen bzw. Nachstellen eines Bowdenzuges. Dies geschieht in der Regel durch eine Veränderung der wirksamen Länge der Bowdenzug-Hülle (2) gegenüber den ortsfesten Widerlagern (8). Um diese Einstellung so zu vereinfachen, daß sie praktisch automatisch bei Einmann-Betätigung erfolgt, sieht die Erfindung vor, die Abstützung eines Hüllenendstückes (3) am Widerlager (8) durch eine Stützhülse (4) vorzunehmen, die am Hüllenendstück (3) längsverschieblich, aber drehschlüssig geführt ist und die eine Sperrnase (11) aufweist, welche mit der Stützhülse (4) längsverschieblich, aber ihr gegenüber verdrehbar ist. Durch diese Verdrehung kann die Sperrnase (11) mindestens einen am Hüllenendstück (3) befindlichen Anschlag (13) axial hintergreifen und damit die Stellung der Stützhülse (4) axial fixieren. Wenn die Drehverstellung der Sperrnase (11) über Torsionsfederkraft (5) erfolgt, ergibt sich die angestrebte automatische Einstelltechnik.

Fig. 1

## Anordnung zur Einstellung von Bowdenzügen

Die Erfindung bezieht sich auf eine Anordnung zur Einstellung der wirksamen Hüllenlänge von Bowdenzügen, bei der eine längs eines Hüllenendstückes verstellbare Stützhülse, die sich an einem ortsfesten Widerlager abstützt, in der gewünschten Einstellposition gegenüber dem Hüllenendstück fixierbar ist.

Bei Bowdenzügen wird die aus Draht, Litze, Seil oder dergleichen bestehende Seele am einen Ende mit dem Betätigungsorgan und am anderen Ende mit dem zu betätigenden Organ verbunden. Eine diese Seele umgebende Hülle stützt sich mit ihren Enden an ortsfesten Widerlagern ab und bildet dabei einen Bogen. Die Krümmung dieses Bogens bestimmt den Abstand der Enden der Seele voneinander. Um einen Bowdenzug in die Anlage, beispielsweise Kraftfahrzeug, einzubauen, muß somit die wirksame Hüllenlänge zwischen den ortsfesten Widerlagern genau eingestellt werden, um den Abstand der Enden der Bowdenzugseele an den anlagemäßig vorgegebenen Abstand der zu betätigenden Organe anzupassen. Außerdem ergibt sich die Notwendigkeit der Nachstellung des Bowdenzuges, nämlich dann, wenn beispielsweise die Seele gedehnt oder die Stellung der zu betätigenden Organe sich verändert hat.

Nach dem Stand der Technik gibt es verschiedene Möglichkeiten zur Durchführung dieser Einstellung bzw. Nachstellung. Bei dem einen Prinzip wird die Hülle geteilt und die Enden der Hülle werden im Teilungsbereich mit mehr oder weniger kompliziert ausgebildeten Hüllenendstücken verbunden, die ineinander geführt und in Längsrichtung relativ zueinander verstellbar sind. In den meisten Fällen geschieht diese Längsverstellung über ineinandergreifende Gewinde (DE-PS 33 17 382). Es ist auch bekannt, die Hülle an ihrem einen Ende mit einem Hüllenendstück fest zu verbinden und auf dem Hüllenendstück eine Stützhülse oder dergleichen anzuordnen, deren Lage zum Hüllenendstück längsverstellbar ist. Mit dieser Stützhülse stützt sich die Hülle am Widerlager ab, wobei zur Längsverstellung der Stützhülse wiederum bevorzugt Gewindeanordnungen verwendet werden, bei denen das Problem besteht, die Drehbeweglichkeit der Teile in der Endeinstellung zu hindern. Aus diesem Grunde weisen die vorbekannten Anordnungen drehschlüssig ineinandergreifende Sperrglieder auf (DE-OS 26 38 212).

Wenn Bowdenzüge in Anlagen eingesetzt werden, bei denen die Enden der Seele diesseits und jenseits einer Trennwand sich befinden, wie dies beispielsweise bei Kraftfahrzeugen der Fall ist, dann ergibt sich die Notwendigkeit, daß zwei Personen zur Einstellung bzw. Nachstellung der Bowdenzüge erforderlich sind. Die eine Person muß nämlich die Seele betätigen, was beispielsweise durch Verstellung eines Pedals erfolgt. Die andere Person hat im Abstützungsbereich der Hülle des Bowdenzuges die erforderliche Drehverstellung zum Längenausgleich der Hülle vorzunehmen. Dadurch entsteht ein erheblicher Kostenaufwand.

Der Erfindung liegt daher die Aufgabe zugrunde, einen Bowdenzug so zu entwickeln, daß dessen Anordnung zur Einstellung der wirksamen Hüllenlänge wesentlich erleichtert und insbesondere nur durch eine Person durchgeführt werden kann.

Diese Aufgabe wird erfindungsgemäß dadurch gelöst, daß die Stützhülse auf dem Hüllenendstück drehschlüssig, aber längsverschieblich geführt und mit mindestens einer Sperrnase versehen ist, die in Umfangsrichtung gegenüber der Stützhülse verdrehbar ist und in der Verdrehstellung mindestens einen am Hüllenendstück befindlichen Anschlag axial hintergreift. Im besonderen sieht die Erfindung vor, daß die Sperrnase gegenüber der Stützhülse torsionsverspannt ist und daß damit automatisch eine Kraft in Umfangsrichtung auf die Sperrnase einwirkt und diese drehverstellt, wenn eine axiale Fixierung der Stützhülse gegenüber dem Hüllenendstück gewünscht ist.

Eine solche grundsätzliche Anordnung hat zur Folge, daß die Einstellung eines Bowdenzuges auf die wirksame Hüllenlänge mit nur einer Person durchgeführt werden kann. Dies ist am Beispiel der Gasbetätigung an einem Kraftfahrzeug leicht verständlich darzustellen. Die Seele des Bowdenzuges ist einerseits mit dem Gaspedal und andererseits mit dem Vergaserhebel verbunden. Die Hülle des Bowdenzuges stützt sich zwischen ortsfesten Widerlagern ab, die diesseits und jenseits der Trennwand zwischen dem Fahrgastraum und dem Motorraum sich befinden. Bei Anwendung der Erfindung braucht eine Bedienungsperson lediglich das Gaspedal zügig bis zum Endanschlag durchzutreten, wobei sich das Hüllenendstück (vergaserseitig) durch die Bohrung des Widerlagers sowie der Stützhülse so weit bewegt, bis die erforderliche Krümmung der Hülle, bezogen auf die Gaspedal-Endlage, sich eingestellt hat. In dieser Endstellung ist nun die Stützhülse axial gegenüber dem Hüllenendstück zu fixieren. Beim Stand der Technik ist es erforderlich, mit einer zweiten Bedienungsperson diese Fixierung durchzuführen.

Nach der Erfindung genügt aber eine Entspannung der Bowdenzugseele, indem das Gaspedal zurückbewegt wird, weil nun die Stützkraft der Stützhülse am Widerlager nachläßt und die Sperrnase sich in Umfangsrichtung in die Arretierstellung verdrehen kann.

In diesem Zusammenhang ist aber darauf hinzuweisen, daß die Erfindung nicht die Zweimann-Bedienung ausschließt, weil nämlich die Verdrehung der Sperrnase nicht unbedingt automatisch, also durch Torsionsverspannung, erfolgen muß, sondern auch durch eine zweite Bedienungsperson bewirkt werden kann. Deshalb beschränkt sich die Erfindung nicht auf eine Anordnung, bei der die Stützhülse und die Sperrnase zueinander torsionsverspannt sind.

In den Unteransprüchen sind zahlreiche Möglichkeiten zur Gestaltung des erfindungsgemäßen Prinzipes aufgeführt.

Der Anspruch 2 zeigt eine einfache Möglichkeit, wie man eine Stützhülse am Hüllenendstück längsverschiebbar führen und ihre Verdrehung verhindern kann.

Im Anspruch 3 ist eine bevorzugte Ausführungsform beschrieben, die es ermöglicht, die Stützhülse bei einer beliebigen Stellung längs des Hüllenenestückes axial zu arretieren, indem die Sperrnase in die dort vorhandene Lücke einer zahnstangenartigen Profilierung des Hüllenendstückes eingreift.

Der Anspruch 4 definiert die Zuordnung einer Nut und der zahnstangenartigen Profilierung, damit die Sperrnase einerseits längsverschieblich und andererseits drehverstellbar und axial fixierbar ist.

Die Möglichkeit der Torsionsverspannung zwischen der Sperrnase und der Stützhülse ergibt sich aus den Ansprüchen 5 - 7 in verschiedenen Varianten, wodurch die Anregung gegeben ist, die Torsionsverspannung auch anderweitig herbeizuführen.

Die Merkmale des Anspruches 8 haben den Sinn, die axiale Fixierung der Stützhülse zu lösen, um eine Nachstellung des Bowdenzuges zu ermöglichen. Nachdem es in der Praxis darauf ankommt, die Stützhülse und die Sperrhülse möglichst klein zu dimensionieren, müssen Vorkehrungen getroffen werden, um die Sperrhülse mit geeigneten Werkzeugen aus der Sperrstellung in die axiale Verschiebestellung zu verdrehen.

Das Merkmal des Anspruches 9 erleichtert die automatische Einmann-Einstellung. Wenn nämlich die Stütz- bzw. Sperrhülse an einer Reibschicht des Widerlagers anliegt, wird das Verdrehen der Sperrnase behindert. Die Torsionskraft des gewählten Verspannungselementes ist in diesem Falle geringer als die Reibkraft der Reibschicht. Man kann also das Pedal oder ein vergleichbares Betätigungsorgan zügig bis zum Endanschlag bewegen, ohne daß sich die Sperrnase verdreht, weil die Reibsicht eine Verdrehung verhindert. Läßt man jedoch das Betätigungsorgan (Pedal) in die Ausgangsstellung zurückgehen, dann verringert sich die Reibkraft, was zur Folge hat, daß die Torsionsverspannung die Sperrnase in die Arretierstellung verdreht.

Der Anspruch 11 zeigt schließlich eine Maßnahme, die axiale Verschiebung der Stützhülse auf dem Hüllenendstück zu erschweren, weil sich nämlich gezeigt hat, daß eine leichtgängige Führung dieser Teile zur ungenauen Längeneinstellung der Bowdenzughülle führt.

Einzelheiten der Erfindung sind in der Zeichnung schematisch und beispielsweise dargestellt. Es zeigen:

Fig. 1: einen Längsschnitt durch das Ende eines abgestützten Bowdenzuges mit einer Anordnung zur Einstellung der wirksamen Hüllenlänge,

Fig. 2: eine Draufsicht auf die Anordnung gem. Fig. 1 in der eingestellten Hüllenlänge,

Fig. 3: einen Querschnitt durch die Anordnung gemäß Fig. 2 längs der Linie III - III und

Fig. 4: einen Querschitt durch die Anordnung gem. Fig. 1 längs der Linie IV - IV.

Der beim Ausführungsbeispiel der Erfindung verwendete Bowdenzug besteht in üblicher Weise aus der Seele (1) und der sie gleitfähig umgebenden Hülle (2). Die Hülle (2) ist an ihrem einen Ende fest mit einem Hüllenendstück (3) verbunden, das gegenüber einem Widerlager (8) abgestützt werden muß. Das andere Ende der Hülle (nicht gezeigt) ist in herkömmlicher Weise am zugeordneten Widerlager abgestützt. In diesem Beispiel wird davon ausgegangen, daß das die Seele (1) betätigende Organ, z.B. Gaspedal, an das in der Zeichnung nicht dargestellte linke Ende der Seele (1) angeschlossen ist. Beim Betätigen dieses Organes wird auf die Seele (1) eine Zugkraft in Pfeilrichtung ausgeübt.

Indem das Hüllenendstück (3) relativ zum Widerlager (8) verstellt und dann fixiert wird, erfolgt dadurch eine Beeinflussung der Seele (1) und der Abstände der Enden dieser Seele (1). Diese Verstellung des Hüllenendstückes (3) gegenüber dem Widerlager (8) ist sowohl bei der Grundeinstellung des Bowdenzuges, als auch bei einer eventuellen erforderlichen Nachstellung notwendig. Die Erfindung zeigt, daß das Hüllenendstück (3) mit Hilfe einer Stütz- und Sperrhülse (4,6) gegenüber dem Widerlager (8) einstellbar abgestützt ist.

Im konkreten Ausführungsbeispiel ist eine Stützhülse (4) axial auf dem Hüllenendstück (3) beweglich geführt, aber gegen Verdrehung gesperrt. Diese Drehversperrung wird beim Ausführungsbeispiel dadurch herbeigeführt, daß das Hüllenendstück (3) eine längslaufende Nut (10) aufweist, in welche die Stützhülse (4) mit einer Paßfeder (12) eingreift.

Diese Längsverschieblichkeit der Stützhülse (4) am Hüllenendstück (3) sollte jedoch unter erschwerten Bedingungen möglich sein. Hierzu zeigt das Ausführungsbeispiel die Anordnung von Verdrängungsrippen (14) am Umfang des Hüllenendstückes (3), welche das Verschieben der Stützhülse (4) erschweren.

Auf dem Hüllenendstück (3) ist außerdem eine Sperrhülse (6) längsverschiebbar, welche eine Sperrnase (11) aufweist. Diese Sperrnase (11) greift in die Nut (10) des Hüllenendstückes (3) ein und ermöglicht dadurch die Längsverstellung der Sperrhülse (6) relativ zum Hüllenendstück (3). Wenn man jedoch die Sperrhülse (6) mit ihrer Sperrnase (11) gegenüber dem Hüllenendstück (3) bzw. der Stützhülse (4) verdreht, kommt die Sperrnase (11) in Eingriff mit Anschlägen (13), die sich ein- oder beidseitig neben der Nut (10) quer zu ihr erstrecken. Zufolge dieser Verdrehung der Sperrnase (11) wird damit eine Längsbewegung der Sperrhülse (6) und damit der Stützhülse (4) verhindert, was zur Folge hat, daß die Hülle (2) über das Hüllenendstück (3) in axialer Richtung gegenüber dem Widerlager (8) abgestützt wird.

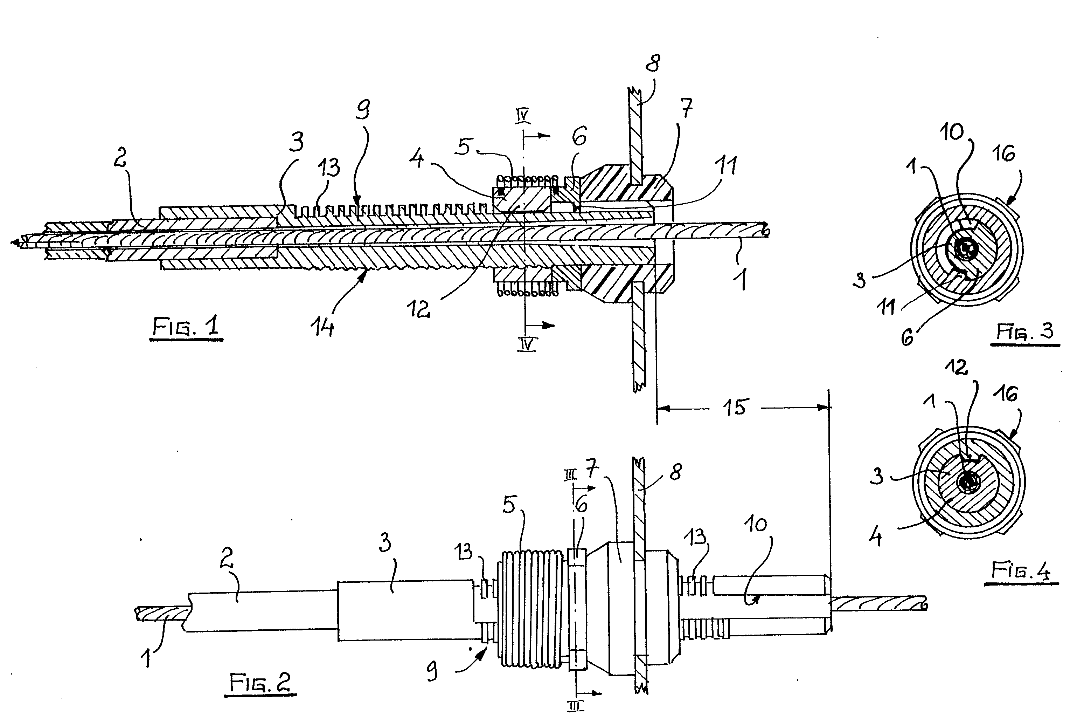

Das Ausführungsbeispiel der Figuren 1 und 2 zeigt eine Torsionsverspannung zwischen der Stützhülse (4) und der Sperrhülse (6) mit Hilfe einer Torsionsfeder (5), deren Enden in radialer Richtung in entsprechende Bohrungen dieser beiden Hülsen (4,6) eingreifen. Durch Verdrehung der Sperrhülse (6) gegenüber der Stützhülse (4) wird eine Fluchtung der Sperrnase (11) gegenüber der Paßfeder (12) herbeigeführt. Dadurch ist es möglich, beide Hülsen (4,6) auf das Hüllenendstück (3) aufzuschieben. Wenn keine oder eine nur geringe axiale Kraft auf die Sperrhülse (6) einwirkt, führt die Torsionsverspannung der Torsionsfeder (5) dazu, die Sperrhülse (6) gegenüber der Stützhülse (4) zu verdrehen und damit das axiale Hintergreifen der Sperrnase (11) gegenüber den Anschlägen (13) herbeizuführen.

Im Zuge einer automatischen Einmann-Einstellung sieht die Erfindung nun vor, daß die Sperrhülse (6) an einer Reibfläche des Widerlagers (8) abgestützt wird. Diese Reibfläche wird durch eine Tülle (7) gebildet, die eine Bohrungswandung des Widerlagers (8) hintergreift und aus einem Material, z.B. Elastomer, besteht, welches die erforderliche Reibkraft erzeugt. An dieser Tülle (7) stützt sich die Sperrhülse (6) ab. Über die Reibkraft wird die Sperrhülse am Verdrehen gehindert, solang die Hülle (2) des Bowdenzuges über das Hüllenendstück (3) eine axiale Kraft auf die Sperrhülse (6) ausübt. Dies ist beim Einstellen der wirksamen Hüllenlänge dann der Fall, wenn das Pedal im Ausführungsbeispiel bis zum Endanschlag betätigt wird. Wenn man hingegen das Pedal in die Ausgangsstellung zurückkehren läßt, reduziert sich die Abstützkraft der Hülle (2,3) was zur Folge hat, daß die Torsionskraft der Torsionsfeder (5) größer ist als die Reibkraft der Sperrhülse (6) an der Tülle (7). Nun kann die Sperrnase (11) gegenüber der Stützhülse (4) verdreht werden, was zur axialen Arretierung der Stützhülse (4) gegenüber dem Hüllenendstück (3) führt.

Wenn man die Sperrhülse (6) mit Schlüsselflächen (16), radialen Bohrungen, Umfangsrippen oder dergleichen versieht, läßt sich in einfacher Weise die Sperrhülse (6) gegenüber der Stützhülse (4) verdrehen, um eine Nacheinstellung des Bowdenzuges durch relative Längsverstellung von Stützhülse (4) und Hüllenendstück (3) herbeizuführen.

Mit (15) ist in Fig. 2 der Einstellweg gezeigt, den das Hüllenendstück (3), bezogen auf Fig. 1, bei der erfindungsgemäßen Einstellung der wirksamen Hüllenlänge zurückgelegt hat. Man sieht in Fig. 2 auch, daß die Nut (10) bis zum Stirnende des Hüllenendstückes (3) verläuft, daß aber die Anschläge (13) der zahnstangenartigen Profilierungen (9) erst in Distanz vom Stirnende des Hüllenendstückes (3) beginnen.

Zusammenfassend wird die Einstellung des Bowdenzuges durch eine Person wie folgt vorgenommen:

Die durch die Widerlage (8) geführte Seele (1) des Bowdenzuges wird (z.B. beim Gaspedalzug eines PKW) linksseitig mit dem Gaspedal, rechtsseitig mit dem Vergaserhebel verbunden. Die Hülle (2) befindet sich zwischen den Widerlagern (8) in einem zunächst noch willkürlichen Bogen. Die Stützhülse (4) und die Sperrhülse (6) liegen mit axialer Spannung an der Tülle (7) an. Ihre Paßfeder (12) bzw. Sperrnase (11) sind in der Nut (10) geführt. Die Hülle (2) bzw. das Hüllenendstück (3) sind in axialer Richtung relativ zu den Stütz- bzw. Sperrhülsen (4,6) bewegbar. Die Sperrhülse (6) kann sich nicht verdrehen, weil dies die Reibung an der Tülle (7) hindert.

Nun wird das Gaspedal zügig bis zum Endanschlag durchgetreten. Die Seele (1) bewegt sich in Pfeilrichtung, was zur Streckung des Hüllenbogens führt. Dabei legt das Ende des Hüllenendstückes (3) die Strecke (15) zurück. In dieser in Fig. 2 dargelegten Stellung muß die axiale Arretierung von Stütz- und Sperrhülse (4,6) gegenüber dem Hüllenendstück (2) erfolgen. Dies geschieht automatisch dadurch, daß das Gaspedal zurückbewegt wird. Die Bowdenzughülle (2) will sich entspannen. Folglich läßt die Reibkraft zwischen der Tülle (7) und der Sperrhülse (6) nach. Nun kommt die Torsionskraft der Torsionsfeder (5) zur Wirkung, die eine Drehverstellung der Sperrhülse (6) gegenüber der Stützhülse (4) veranlaßt, was zur Folge hat, daß die Sperrnase (11) in die Lücke zwischen zwei Anschlägen (13) eindringt und damit eine axial Sperre herbeiführt.

# Ansprüche

1) Anordnung zur Einstellung der wirksamen Hüllenlänge von Bowdenzügen, bei der eine längs eines Hüllenendstückes (3) verstellbare Stützhülse (4), die sich an einem ortsfesten Widerlager (8) abstützt, in der gewünschten Einstellposition gegenüber dem Hüllenendstück (3) fixierbar ist, dadurch **gekennzeichnet**, daß die Stützhülse (4) auf dem Hüllenendstück (3) drehschlüssig, aber längsverschieblich geführt und mit mindestens einer Sperrnase (11) versehen ist, die in Umfangsrichtung gegenüber der Stützhülse (4) verdrehbar ist und in der Verdrehstellung mindestens einen am Hüllenendstück (3) befindlichen Anschlag (13) axial hintergreift.

2) Anordnung nach Anspruch 1, dadurch **gekennzeichnet**, daß das Hüllenendstück (3) an seiner Außenfläche eine längs einer Mantellinie sich erstreckende Nut (10) aufweist, in die eine an der Innenfläche der Stützhülse (4) befindliche, insbesondere angeformte Paßfeder (12) eingreift, und daß die Anschläge (13) sich in Umfangsrichtung, ausgehend von der Nut (10), erstrecken.

3) Anordnung nach Anspruch 1 oder 2, dadurch **gekennzeichnet**, daß die Anschläge (10) in Form einer zahnstangenartigen Profilierung (9) des Hüllenendstückes (3) ausgebildet sind, die sich längs eines Randes oder beider Ränder der Nut (10) erstreckt.

4) Anordnung nach Anspruch 1 oder einem der folgenden, dadurch **gekennzeichnet**, daß die Sperrnase (11) in die Nut (10) eingreift und eine dem Abstand zwischen jeweils zwei Anschlägen (13) der zahnstangenartigen Profilierungen (9) entsprechende Dicke aufweist.

5) Anordnung nach Anspruch 4, dadurch **gekennzeichnet**, daß die Sperrnase (11) Bestandteil einer Sperrhülse (6) ist, die auf dem Hüllenendstück (3) längsverschieblich und verdrehbar ist und an die Stützhülse (4) mit ihr torsionsverspannt angrenzt.

6) Anordnung nach Anspruch 5, dadurch **gekennzeichnet**, daß eine die Stützhülse (4) umgreifende Torsionsfeder (5) mit ihren Enden einerseits in die Stützhülse (4) und andererseits in die Sperrhülse (6) eingreift.

7) Anordnung nach Anspruch 5, dadurch **gekennzeichnet**, daß die Stützhülse (4) und die Sperrhülse (6) durch ein torsions- und rückstellfähiges Mittelteil, insbesondere aus Gummi, Gummiersatzstoff oder Kunststoff, miteinander verbunden sind.

8) Anordnung nach Anspruch 5 oder einem der folgenden, dadurch **gekennzeichnet**, daß die Sperrhülse (6) eine dem Einwirken von Werkzeug zur Drehverstellung zugängliche Formgebung aufweist, z.B. mit Schlüsselflächen (16), Randverzahnungen, radialen Bohrungen o. dgl. versehen ist.

9) Anordnung nach Anspruch 1 oder einem der folgenden, dadurch **gekennzeichnet**, daß die Stütz- bzw. Sperrhülse (4,6) an einer Reibschicht des Widerlagers (8) abgestützt ist.

10) Anordnung nach Anspruch 9, dadurch **gekennzeichnet**, daß die Reibschicht von einer eine Bohrung des Widerlagers (8) durchsetzenden Tülle (7) gebildet ist, in der das Hüllenendstück (3) geführt ist.

11) Anordnung nach Anspruch 1 oder einem der folgenden, **gekennzeichnet** durch reibungserhöhende Mittel (14) an den Gleitflächen des Hüllenendstückes oder/und der Stützhülse.

## Stückliste

1 Seele
2 Hülle
3 Hüllenendstück
4 Stützhülse
5 Torsionsfeder
6 Sperrhülse
7 Tülle
8 Widerlager
9 zahnstangenartige Profilierung
10 Nut
11 Sperrnase
12 Paßfeder
13 Anschlag
14 Verdrängungsrippen
15 Einstellweg
16 Schlüsselfläche

FIG. 1

FIG. 2

FIG. 3

FIG. 4